# FASCICULE DE BREVET EUROPEEN

(11) **EP 1 782 495 B1**
(45) Date de publication et mention de la délivrance du brevet: **15.05.2013**
(21) Numéro de dépôt: 05758473.2
(22) Date de dépôt: 27.06.2005
(51) Int. Cl.: H01M 8/04, B60L 11/18, B60L 11/00

(54) **ARRET D'UNE PILE A COMBUSTIBLE ALIMENTEE EN OXYGENE PUR**
STOPPEN EINER MIT REINEM SAUERSTOFF VERSORGTEN BRENNSTOFFZELLE
STOPPING A FUEL CELL SUPPLIED WITH PURE OXYGEN

(30) Priorité: 20.07.2004 FR 0408056
(43) Date de publication de la demande: 09.05.2007
(73) Titulaire: MICHELIN Recherche et Technique S.A., 1763 Granges-Paccot (CH); PAUL SCHERRER INSTITUT, 5232 Villigen PSI (CH)
(72) Inventeur: BUCHI, Felix, Ch-4900 Langenthal (CH); PAGANELLI, Gino, CH-1782 Belfaux (CH); TSUKADA, Akinori, CH-5416 Kirchdorf AG (CH)
(74) Mandataire: Bauvir, Jacques
(86) Numéro de dépôt international: PCT/EP2005/006890
(87) Numéro de publication internationale: WO 2006/012954

(56) Documents cités:
- EP-A- 1 416 561
- DE-A1- 10 059 393
- US-A- 4 226 919
- US-A- 5 200 278
- US-A- 6 068 942
- US-A1- 2001 055 707
- PATENT ABSTRACTS OF JAPAN vol. 014, no. 182 (E-0916), 12 avril 1990 (1990-04-12) & JP 02 033866 A (MITSUBISHI ELECTRIC CORP), 5 février 1990 (1990-02-05)
- PATENT ABSTRACTS OF JAPAN vol. 013, no. 374 (E-808), 18 août 1989 (1989-08-18) & JP 01 128362 A (HITACHI LTD), 22 mai 1989 (1989-05-22)

## Description

### DOMAINE DE L'INVENTION

La présente invention se rapporte aux piles à combustibles, notamment aux applications automobiles des piles à combustible.

### ETAT DE LA TECHNIQUE

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

En ce qui concerne le carburant, soit on dispose d'une alimentation en hydrogène, soit on produit l'hydrogène dont on a besoin près de la pile à combustible au moyen d'un reformeur lui-même alimenté par exemple par un hydrocarbure. En ce qui concerne le comburant, soit on alimente la pile à combustible en air atmosphérique comprimé et on rejette en aval de la pile à combustible le gaz en excès dans lequel la proportion d'oxygène a diminué, soit on alimente la pile à combustible en oxygène pur. Cette dernière solution présente quelques avantages, notamment une réponse plus dynamique de la pile à une demande de courant, ce qui est intéressant en particulier pour les applications aux engins de transport comme les automobiles dont on sait qu'elles imposent des conditions de fonctionnement particulièrement intermittentes, contrairement aux applications stationnaires. Comme avantages d'une alimentation d'une pile à combustible en oxygène pur, citons encore que le rendement et la densité de puissance sont meilleurs et que l'on n'a pas de contamination par des polluants contenus dans l'air atmosphérique.

Mais dans ce cas l'arrêt de la pile n'est pas immédiat car on ne peut profiter de l'effet asphyxiant de l'azote présent dans l'air. On ne peut interrompre totalement la réaction électrochimique par simple coupure des vannes d'alimentations du carburant et du comburant. En effet, la quantité d'oxygène et d'hydrogène restant emprisonnée dans les canaux respectifs de la pile à combustible suffit à entretenir la réaction électrochimique et il y a risque que cette réaction persiste pendant plusieurs heures. Par conséquent, une tension électrique persiste aux bornes de la pile à combustible.

Ce phénomène présente plusieurs inconvénients :
- la tension électrique persistante présente en soi un danger pour les personnes, en particulier si une intervention est nécessaire autour de la pile à combustible ;
- la décharge longue et incontrôlée des gaz encore présents au sein de la pile amène les circuits de gaz en dépression par rapport à l'atmosphère et peut provoquer des pressions différentielles préjudiciables à la bonne tenue mécanique des éléments de la pile à combustible.

La demande de brevet DE 100 59 393 décrit une méthode d'extinction d'une pile à combustible alimentée en hydrogène et en oxygène purs. Cette demande de brevet décrit la séquence suivante : d'abord coupure de l'alimentation en oxygène, puis utilisation d'une charge électrique variable pour dissiper l'énergie électrique produite par la poursuite de la réaction de l'hydrogène et de l'oxygène dans la pile à combustible. Ensuite, lorsque la pression d'oxygène est tombée sous un seuil prédéterminé, on inonde les circuits d'hydrogène et d'oxygène en azote jusqu'à une pression prédéterminée. Ceci provoque l'arrêt de la pile à combustible. Cependant, cette solution oblige à disposer d'une réserve d'azote. En outre, le démarrage ultérieur de la pile à combustible est inéluctablement perturbé par la présence d'azote dans les circuits de gaz.

L'objectif de l'invention est de parvenir, sans devoir recourir à une alimentation en azote, à un arrêt maîtrisé et rapide de la pile à combustible, c'est à dire à un arrêt des processus électrochimiques internes de façon à ce que la tension globale aux bornes de la pile à combustible tombe effectivement à près de zéro et de façon à ce qu'il n'y ait plus aucune consommation de gaz, et de façon à ce que la pile soit dans un état qui reste propice à un démarrage ultérieur rapide.

### BREVE DESCRIPTION DE L'INVENTION

L'invention propose une procédure d'arrêt d'un système de fourniture d'électricité comportant une pile à combustible utilisant comme électrolyte une membrane polymère, la pile étant alimentée en oxygène pur comme comburant et délivrant une tension électrique sur une ligne électrique de puissance, le système comportant :
- un circuit d'alimentation en gaz carburant côté anodes ;
- un circuit d'alimentation en oxygène côté cathodes, le circuit d'alimentation en oxygène comportant des moyens permettant la mise à l'atmosphère dudit circuit d'alimentation en oxygène ;
   la procédure d'arrêt comprenant les étapes suivantes, pendant lesquelles la pression dans le circuit d'alimentation en hydrogène n'est jamais inférieure à la pression atmospherique:
   ● une étape initiale pendant laquelle l'alimentation en oxygène est interrompue,
   ● une phase de consommation pendant laquelle un courant de maintien est prélevé à la pile à combustible,
   ● une étape de neutralisation pendant laquelle le circuit d'alimentation en oxygène est mis à l'atmosphère, puis à nouveau isolé de l'atmosphère,
   ● une étape finale pendant laquelle l'alimentation en gaz carburant est interrompue.

Dans la suite de la description, on illustre l'invention en considérant une pile à combustible du type à électrolyte sous la forme d'une membrane polymère (c'est à dire de type PEFC pour Polymer Electrolyte Fuel Cell). Ceci constitue un mode de réalisation favorable pour les applications aux véhicules de transport, en particulier les véhicules automobiles, mais n'est nullement limitatif. Un inconvénient du fait que l'arrêt de la pile n'est pas immédiat est que le système de refroidissement de la pile à combustible devrait être maintenu actif pendant une longue durée après l'extinction du véhicule, faute de quoi il y a risque d'apparition de points chauds nuisibles à la membrane polymère. En outre, la membrane polymère peut se révéler assez sensible aux pressions différentielles qui risquent d'apparaître. La procédure d'arrêt proposée par la présente invention est tout particulièrement apte à éliminer ces inconvénients pour ce type de pile à combustible.

### BREVE DESCRIPTION DES FIGURES

La suite de la description permet de bien faire comprendre tous les aspects de l'invention au moyen des dessins joints dans lesquels :
- la figure 1 est un organigramme de la procédure d'arrêt d'une pile à combustible alimentée en oxygène pur ;
- la figure 2 est un schéma d'un véhicule pourvu d'un système de production d'énergie électrique utilisant une pile à combustible alimentée en oxygène pur ;
- la figure 3 montrent plusieurs chronogrammes illustrant l'arrêt d'une pile à combustible alimentée en oxygène pur.

### DESCRIPTION DU MEILLEUR MODE DE REALISATION DE L'INVENTION

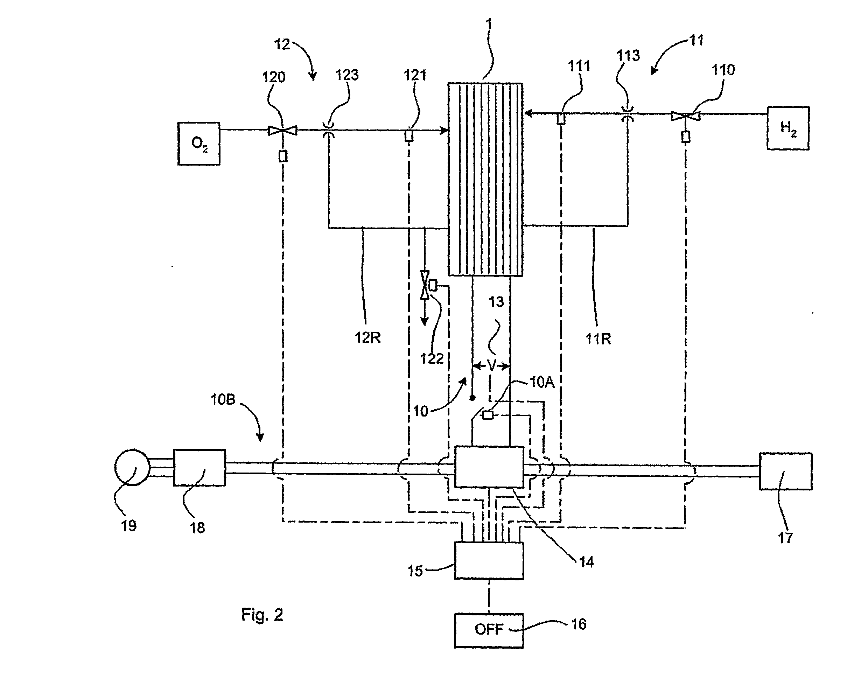

A la figure 2, on voit une pile à combustible 1 du type à électrolyte sous la forme d'une membrane polymère (c'est à dire de type PEFC pour Polymer Electrolyte Fuel Cell). La pile à combustible 1 est approvisionnée par deux gaz, à savoir le carburant (l'hydrogène stocké ou fabriqué à bord du véhicule) et le comburant (l'oxygène pur) qui alimentent les électrodes des cellules électrochimiques. Pour simplifier, la figure 2 ne représente que les éléments des circuits de gaz utiles à la compréhension de l'invention.

L'installation comporte un circuit de gaz carburant 11 coté anodes. On voit un réservoir d'hydrogène pur H₂ relié à l'entrée du circuit anodique de la pile à combustible 1 au moyen d'une canalisation d'alimentation qui passe par une vanne d'alimentation 110 en hydrogène, puis par un éjecteur 113. Une sonde de pression 111 est installée sur la canalisation juste avant l'entrée dans la pile à combustible 1. Un circuit de recyclage 11R est branchée à la sortie du circuit anodique de la pile à combustible 1. L'éjecteur 113 assure le recyclage des gaz non consommés et le mélange au gaz frais en provenance du réservoir.

L'installation comporte aussi un circuit de gaz comburant 12 coté cathodes. On voit un réservoir d'oxygène pur O₂ relié à l'entrée du circuit cathodique de la pile à combustible 1 au moyen d'une canalisation d'alimentation qui passe par une vanne d'alimentation 120 en oxygène, puis par un éjecteur 123. Une sonde de pression 121 est installée sur la canalisation juste avant l'entrée dans la pile à combustible 1. Un circuit de recyclage 12R est branchée à la sortie du circuit cathodique de la pile à combustible 1. L'éjecteur 123 assure le recyclage des gaz non consommés et le mélange au gaz frais en provenance du réservoir. Juste à la sortie des gaz de la pile à combustible 1, on voit une vanne de purge 122 permettant de mettre à l'atmosphère le circuit d'oxygène.

La pile à combustible 1 est connectée à une ligne électrique de puissance 10 à laquelle elle délivre une tension électrique continue. On voit un interrupteur 10A permettant d'isoler la pile à combustible et une charge électrique 10B qui est connectée à la ligne électrique de puissance 10. La pile à combustible 1 délivre un courant électrique continu à une unité de gestion de la puissance électrique 14 (voir figure 2). Le courant électrique continu délivré par la pile à combustible est mesuré dans l'unité de gestion de la puissance électrique 14. L'unité de gestion de la puissance électrique 14 est branchée d'une part à un module de traction électrique pour véhicule automobile, constitué essentiellement d'un convertisseur DC/AC 18 et d'une machine électrique 19 mécaniquement accouplée à une ou aux roues motrices (non représentées) d'un véhicule automobile. L'unité de gestion de la puissance électrique 14 est également branchée à un dispositif de stockage de l'énergie électrique, de préférence un banc de super-condensateurs 17.

Ainsi, la pile à combustible 1 peut fournir de l'électricité au module de traction électrique 18+19, ou au banc de super-condensateurs 17, ou aux deux. Le banc de super-condensateurs 17 peut recevoir de l'énergie électrique et la stocker, ou peut fournir de l'énergie électrique au module de traction électrique 18+19. Quant à ce dernier, la machine électrique 19 étant réversible, elle peut absorber de l'énergie électrique pour assurer la propulsion du véhicule, ou recharger le banc de super-condensateurs 17 en mode freinage électrique du véhicule. L'unité de gestion de la puissance électrique 14 régule la circulation de puissance en fonction des commandes du conducteur du véhicule et en fonction de l'état du système de fourniture d'électricité. Bien entendu, l'équipement électrique peut comme connu comporter bien d'autres organes, comme une résistance électrique de dissipation, seuls les éléments utiles à la compréhension de l'invention étant rappelés ci-dessus.

La pile à combustible 1 est pilotée par une unité de contrôle 15. Cette unité de contrôle 15 reçoit l'information des capteurs de pression dans le circuit d'hydrogène (capteur 111), dans le circuit d'oxygène (capteur 121), d'un dispositif de mesure de la tension 13 existant sur la ligne électrique de puissance 10, d'un organe de déclenchement 16 (par exemple une clef de contact) de la procédure d'arrêt et l'unité de contrôle 15 pilote le fonctionnement des différentes vannes (110, 120, 122).

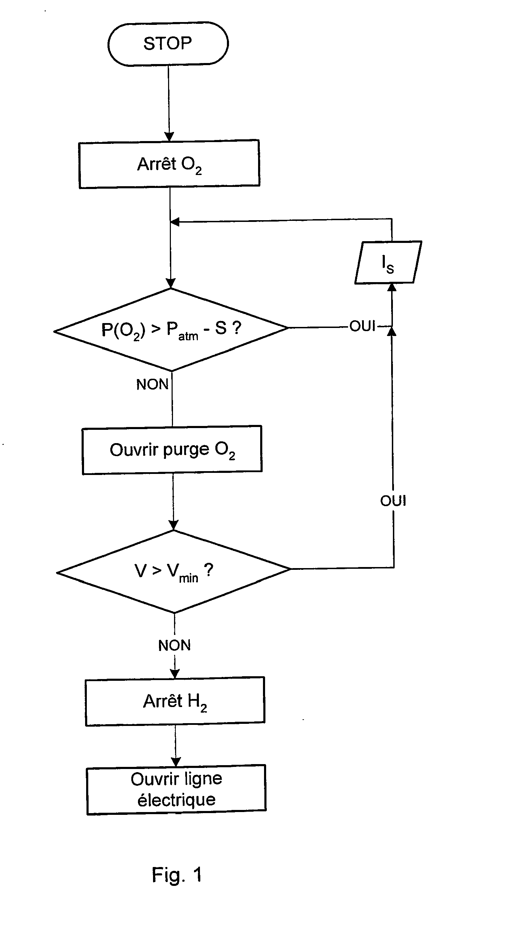

La figure 1 illustre la séquence des opérations proposées pour provoquer un arrêt bien maîtrisé de la pile à combustible 1. Le conducteur via une clef ou un interrupteur, ou un système de sécurité quelconque assurant la surveillance du véhicule envoie à l'unité de contrôle 15 un signal demandant l'arrêt de la pile à combustible. A la réception du signal d'arrêt, l'étape initiale permet la fermeture de la vanne d'alimentation en oxygène. A cette fin, l'unité de contrôle 15 de la pile à combustible 1 envoie un signal électrique de fermeture de la vanne 120 d'alimentation en oxygène uniquement. L'alimentation en hydrogène n'est pas coupée à ce stade. La figure 1 illustre un pilotage particulier de l'arrêt d'une pile à combustible alimentée en oxygène pur, conforme à l'invention, l'action « arrêt O₂ » représentant cette étape initiale.

La phase de consommation est effectuée au moins tant que la tension est supérieure à un seuil prédéterminé. L'unité de contrôle 15 de la pile à combustible 1 assure un prélèvement d'un courant Is faible mais suffisant pour consommer le gaz restant dans les canaux de la pile, ce qui est représenté par le bloc Is à la figure 1. Eventuellement, le courant Is peut être ajusté en fonction de l'état de la pile (température, distribution de tension entre toutes les cellules, ...). On décrira plus loin l'utilisation de ce courant Is.

L'étape de neutralisation est réalisée de préférence par une succession de périodes pendant lesquelles le circuit d'oxygène est fugitivement mis à l'atmosphère puis à nouveau isolé de l'atmosphère. On profite du fait que le circuit d'oxygène est en dépression pour y introduire l'air ambiant de façon naturelle, sans avoir besoin de le comprimer. L'étape de neutralisation débute dès que la pression dans le circuit d'oxygène est inférieure à une pression de comparaison Pₐₜₘₒ - S. Il est proposé ici que cette pression de comparaison soit fixée à un niveau quelque peu en dessous de la pression de l'atmosphère diminuée d'une valeur choisie S. Notons que l'exécution de la phase de consommation se poursuit de préférence, de sorte que la phase de consommation et l'étape de neutralisation sont au moins partiellement concomitantes. Lorsque la condition de pression dans le circuit d'oxygène inférieure à ladite pression de comparaison est satisfaite et tant que la tension V aux bornes de la pile à combustible est supérieure à un seuil Vₘᵢₙ, tension mesurée sur la ligne électrique de puissance 10, l'unité de contrôle 15 de la pile à combustible 1 envoie un signal électrique d'ouverture de la vanne de purge 122, ce qui est éventuellement répété plusieurs fois, pour aspirer de l'air à l'intérieur du circuit d'oxygène. L'azote de l'air introduit par ce moyen dans le circuit d'oxygène suffit pour accélérer suffisamment l'arrêt de la réaction électrochimique, même si l'effet asphyxiant n'est pas aussi net que ce que l'on aurait obtenu avec de l'azote pur. Pendant cette phase, un faible courant continue à être prélevé, ce qui est illustré à la figure 1 par la seconde boucle.

Jusqu'à cette phase et y compris pendant cette phase, une faible alimentation en hydrogène continue d'être assurée et régulée de façon à ce que la pression coté hydrogène parvienne à 0 bar (pression relative). Enfin, lorsque la tension V aux bornes de la pile à combustible est inférieure audit seuil Vₘᵢₙ, l'unité de contrôle 15 de la pile à combustible 1 procède à l'exécution de l'étape finale : l'alimentation en hydrogène est interrompue. En effet, lorsque la tension de la pile est descendue à un niveau suffisamment faible, la pile peut être considérée comme arrêtée. Le courant délivré à la charge électrique est de préférence volontairement interrompu juste après l'arrêt de l'alimentation en hydrogène. A cette fin, l'unité de contrôle 15 de la pile à combustible 1 ouvre l'interrupteur 10A lors de l'étape finale.

Le circuit d'hydrogène n'est jamais mis à l'atmosphère ; on a constaté que, même s'il subsiste de l'hydrogène dans le circuit de gaz côté anode, la réaction électrochimique est arrêtée de manière efficiente sans étape de mise à l'atmosphère du circuit de gaz carburant côté anode. Un autre avantage de la procédure d'arrêt proposée par l'invention est que la pile à combustible à l'arrêt est dans une configuration propice à un démarrage rapide.

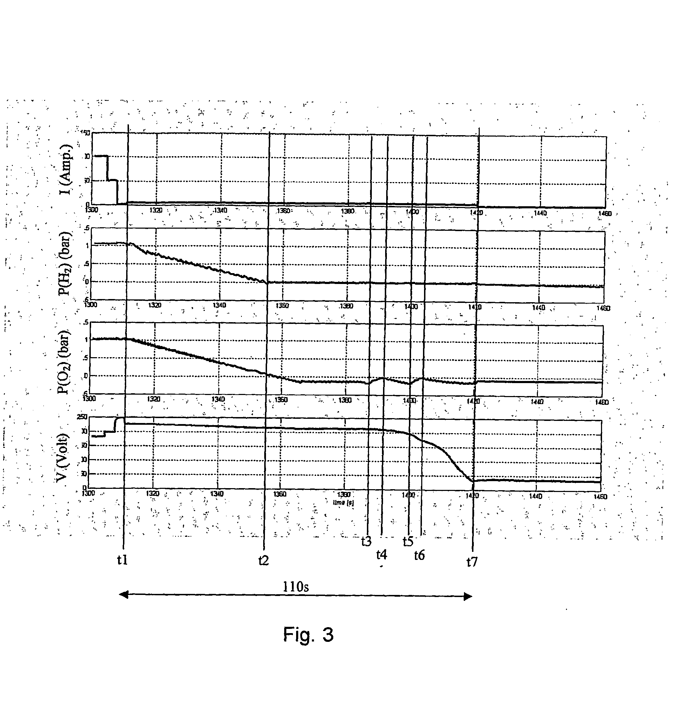

Les courbes de la figure 3 illustrent l'évolution de quelques paramètres pendant l'extinction de la pile à combustible 1 selon cette procédure, pour une pile à combustible de 30kW possédant 250 cellules actives d'une surface unitaire de 200cm². L'ordre de départ du processus d'arrêt intervient en t1 (étape initiale). La première des courbes illustre l'évolution du courant mesuré en Ampère dans la ligne électrique de puissance 10 ; on voit qu'un faible courant de maintien persiste jusqu'à t7 (étape finale), au moment de la coupure de l'alimentation en hydrogène. Au moment t2, la pression d'oxygène (troisième courbe donnant P(O₂) en bar) devient inférieure à la pression atmosphérique. Dans ce cas particulier, la mise à l'atmosphère du circuit d'oxygène intervient à deux reprises, une première fois entre t3 (Instant où pour la 1^{ère} fois la pression 02 devient inférieure à ladite pression de comparaison Pₐₜₘₒ - S) et t4, puis entre t5 (Instant où pour la 2^{ème} fois la pression 02 devient inférieure à ladite pression de comparaison Pₐₜₘₒ - S) et t6. Dans cet exemple, cette procédure permet de faire chuter la tension de la pile (voir la quatrième courbe donnant la tension en Volt sur la ligne électrique de puissance 10) depuis une valeur nominale de 250 Volt à une valeur inférieure à 30 Volt en un temps d'environ 110 secondes. Ce temps dépend évidemment de la valeur du courant Is prélevé sur la pile. La phase de consommation va de t1 à t7. L'étape de neutralisation va quant à elle de t3 à t6.

Dans la mesure où la procédure d'extinction de la pile à combustible 1 proposée suppose l'absorption d'un courant électrique pendant l'extinction, il est donc tout particulièrement avantageux que le système de fourniture d'électricité comporte, outre la pile à combustible 1, un dispositif de stockage d'énergie électrique 17, et que l'ordre de prélèvement d'un faible courant de maintien fasse basculer l'unité de gestion de l'énergie dans un mode de recharge du dispositif de stockage d'énergie électrique. Dans la pratique, le courant est aussi utilisé pour maintenir l'alimentation des auxiliaires.

Du fait qu'un courant électrique continue à être absorbé par la charge électrique branchée sur la pile à combustible 1, la consommation de gaz conduit à une diminution de la pression de gaz coté oxygène, là où l'alimentation en gaz est coupée. Compte tenu de la relation stoechiométrique, la consommation de gaz est environ deux fois plus importante coté hydrogène. De préférence, afin d'éviter l'apparition d'une pression différentielle importante entre le circuit d'hydrogène et le circuit d'oxygène, la pression d'hydrogène est régulée de façon à suivre la pression d'oxygène (voir la deuxième courbe donnant P(H₂) en bar à la figure 3). On s'arrange cependant pour que la pression d'hydrogène ne soit jamais inférieure à la pression atmosphérique, qui est la pression du circuit d'oxygène à la fin de la séquence d'arrêt. En outre, ceci évite toute contamination du circuit d'hydrogène par l'azote.

Au besoin, de préférence, afin que le véhicule soit mis à l'arrêt avec une réserve d'énergie électrique maximale dans le banc de super-condensateurs, à la suite d'une activation de l'organe d'arrêt et avant de procéder à la fermeture de la vanne d'alimentation en oxygène, on opère un contrôle du niveau de charge du dispositif de stockage d'énergie électrique et, tant que celui-ci est inférieur à un seuil haut, on maintient la pile en opération et on fait basculer l'unité de gestion de l'énergie dans un mode de recharge du dispositif de stockage d'énergie électrique, puis lorsque le niveau de charge est supérieur ou égal audit seuil haut, on opère la fermeture de la vanne d'alimentation en oxygène. Ceci est très utile au redémarrage ultérieur du véhicule.

## Revendications

1. Procédure d'arrêt d'un système de fourniture d'électricité comportant une pile à combustible (1), la pile étant alimentée en oxygène pur comme comburant et délivrant une tension électrique sur une ligne électrique de puissance (10), le système comportant :
- un circuit d'alimentation en hydrogène (11) côté anodes ;
- un circuit d'alimentation en oxygène (12) côté cathodes, le circuit d'alimentation en oxygène comportant des moyens permettant la mise à l'atmosphère dudit circuit d'alimentation en oxygène ;
la procédure d'arrêt comprenant les étapes suivantes, pendant lesquelles la pression dans le circuit d'alimentation en hydrogène n'est jamais inférieure à la pression atmosphérique :
● une étape initiale pendant laquelle l'alimentation en oxygène est interrompue,
● une phase de consommation pendant laquelle un courant de maintien est prélevé à la pile à combustible,
● une étape de neutralisation pendant laquelle le circuit d'alimentation en oxygène est mis à l'atmosphère, puis à nouveau isolé de l'atmosphère,
● une étape finale pendant laquelle l'alimentation en hydrogène est interrompue.

2. Procédure d'arrêt selon la revendication 1, pour un système comportant en outre
- sur le circuit d'alimentation en hydrogène (11) côté anodes, une vanne d'alimentation (110) et une sonde de pression (111) disposée en aval de la vanne d'alimentation ;
- sur le circuit d'alimentation en oxygène (12), une vanne d'alimentation (120) et une sonde de pression (121) disposée en aval de la vanne d'alimentation, ainsi qu'une vanne de purge (122) permettant la mise à l'atmosphère dudit circuit d'alimentation en oxygène ;
- un dispositif de mesure de la tension (13) sur ladite ligne électrique de puissance (10) ;
dans laquelle la procédure d'arrêt comprend les opérations suivantes :
- l'étape initiale permet la fermeture de la vanne (110) d'alimentation en oxygène ;
- la phase de consommation est effectuée au moins tant que la tension est supérieure à un seuil prédéterminé,
- l'étape de neutralisation débute dès que la pression dans le circuit d'oxygène est inférieure à une pression de comparaison et est effectuée tant que la tension sur la ligne électrique de puissance est supérieure audit seuil.

3. Procédure d'arrêt selon la revendication 2, dans laquelle la pression de comparaison est inférieure à la pression atmosphérique d'une valeur (S) choisie.

4. Procédure d'arrêt selon la revendication 2 ou 3, dans laquelle la phase de consommation et l'étape de neutralisation sont au moins partiellement concomitantes.

5. Procédure d'arrêt selon la revendication 2, dans laquelle l'étape de neutralisation est réalisée par une succession de périodes pendant lesquelles le circuit d'oxygène est fugitivement mis à l'atmosphère puis à nouveau isolé de l'atmosphère.

6. Procédure d'arrêt selon l'une des revendications précédentes, pour un système dans lequel la ligne électrique de puissance comporte un interrupteur (10A), dans laquelle on ouvre l'interrupteur à l'étape finale dès que l'alimentation en hydrogène a été interrompue.

7. Procédure d'arrêt selon la revendication 1, pour un système comportant en outre une unité de gestion de la puissance électrique (14) prélevée à la pile et une charge électrique alimentée par ladite unité de gestion de puissance et un dispositif de stockage d'énergie électrique, dans laquelle la phase de consommation fait basculer l'unité de gestion de l'énergie dans un mode de recharge du dispositif de stockage d'énergie électrique.

8. Procédure d'arrêt selon la revendication 7, pour un système dans lequel le dispositif de stockage d'énergie électrique est un banc de super-condensateurs (17).

9. Procédure d'arrêt selon la revendication 7 ou 8 dans laquelle, avant de procéder à l'étape initiale, on opère un contrôle du niveau de charge du dispositif de stockage d'énergie électrique et, tant que celui-ci est inférieur à un seuil haut, on maintient la pile en opération et on fait basculer l'unité de gestion de l'énergie dans un mode de recharge du dispositif de stockage d'énergie électrique, puis lorsque le niveau de charge est supérieur ou égal audit seuil haut, on opère l'étape initiale.

10. Procédure d'arrêt selon la revendication 1, pour un système installé dans un véhicule automobile et dans lequel la pile à combustible utilise comme électrolyte une membrane polymère.

## Patentansprüche

1. Abschaltverfahren eines Stromversorgungssystems, das eine Brennstoffzelle (1) aufweist, wobei die Batterie mit reinem Sauerstoff als Brennstoff versorgt wird und eine elektrische Spannung auf eine elektrische Stromleitung (10) liefert, wobei das System Folgendes aufweist:
- einen Wasserstoffversorgungskreislauf (11) auf der Seite der Anoden,
- einen Sauerstoffversorgungskreislauf (12) auf der Seite der Kathoden, wobei der Sauerstoffversorgungskreislauf Mittel aufweist, die eine Entlüftung in die Umgebung des Sauerstoffversorgungskreislaufs erlauben,
wobei das Abschaltverfahren die folgenden Schritte aufweist, während denen der Druck in dem Wasserstoffversorgungskreislauf nie unter dem Luftdruck liegt:
● eine Anfangsschritt, während dessen die Sauerstoffversorgung unterbrochen ist,
● eine Verbrauchsphase, während der ein Haltestrom an der Brennstoffzelle entnommen wird,
● einen Neutralisierungsschritt, während dessen die Sauerstoffversorgungskreislauf in die Umgebung entlüftet und dann erneut von der Umgebung isoliert wird,
● einen abschließenden Schritt, während dessen die Wasserstoffversorgung unterbrochen wird.

2. Abschaltverfahren nach Anspruch 1 für ein System, das ferner Folgendes aufweist:
- auf dem Wasserstoffversorgungskreislauf (11), auf der Seite der Anoden, einen Versorgungsschieber (110) und einen Drucksensor (111), der stromabwärts des Versorgungsschiebers angeordnet ist;
- auf dem Sauerstoffversorgungskreislauf (12), einen Versorgungsschieber (120) und einen Drucksensor (121), der stromabwärts des Versorgungsschiebers angeordnet ist, sowie auch einen Entlüftungsschieber (122), der das Entlüften dieses Sauerstoffversorgungskreislaufs in die Umgebung erlaubt,
- eine Vorrichtung (13) zum Messen der Spannung auf der Stromleitung (10);
bei dem das Abschaltverfahren die folgenden Aktionen aufweist:
- der Anfangsschritt erlaubt das Schließen des Sauerstoffversorgungsschiebers (110);
- die Verbrauchsphase läuft wenigstens solange wie die Spannung höher ist als ein vorbestimmter Schwellenwert,
- der Neutralisierungsschritt beginnt, sobald der Druck in dem Sauerstoffversorgungskreislauf niedriger ist als ein Vergleichsdruck und läuft, solange die Spannung auf der Stromleitung größer ist als der Schwellenwert.

3. Abschaltverfahren nach Anspruch 2, wobei der Vergleichsdruck um einen ausgewählten Wert (S) niedriger ist als Luftdruck.

4. Abschaltverfahren nach Anspruch 2 oder 3, bei dem die Verbrauchsphase und der Neutralisierungsschritt wenigstens teilweise gleichzeitig laufen.

5. Abschaltverfahren nach Anspruch 2, bei dem der Neutralisierungsschritt durch eine Abfolge von Perioden ausgeführt wird, während derer der Sauerstoffkreislauf vorübergehend kurz in die Umgebung entlüftet und dann wieder von der Umgebung isoliert wird.

6. Abschaltverfahren nach einem der vorhergehenden Ansprüche für ein System, bei dem die Stromleitung einen Schalter (10A) aufweist, bei dem man den Schalter beim Endschritt öffnet, sobald die Wasserstoffversorgung unterbrochen wurde.

7. Abschaltverfahren nach Anspruch 1 für ein System, das ferner eine Verwaltungseinheit (14) der elektrischen Leistung, die aus der Batterie entnommen wird, aufweist, und eine Stromcharge, die von der Leistungsverwaltungseinheit zugeführt wird, und eine Stromspeichervorrichtung, bei dem die Verbrauchsphase die Verwaltungseinheit der Energie auf einen Auflademodus der Stromspeichervorrichtung umschaltet.

8. Abschaltverfahren nach Anspruch 7 für ein System, bei dem die Stromspeichervorrichtung eine Superkondensatorreihe (17) ist.

9. Abschaltverfahren nach Anspruch 7 oder 8, bei dem, vor dem Ausführen des Anfangsschritts, eine Kontrolle des Ladezustands der Stromspeichervorrichtung erfolgt und, solange dieser unter einem oberen Schwellenwert liegt, die Batterie in Betrieb gelassen wird und man die Verwaltungseinheit der Energie auf einen Auflademodus der Stromspeichereinheit umschaltet, und, wenn der Ladezustand größer oder gleich dem oberen Schwellenwert ist, der Anfangsschritt ausgeführt wird.

10. Abschaltverfahren nach Anspruch 1 für ein System, das in einem Kraftfahrzeug installiert ist und bei dem die Brennstoffzelle eine Polymermembran als Elektrolyt verwendet.

## Claims

1. Procedure for shutting down an electricity supply system comprising a fuel cell (1), the cell being supplied with pure oxygen as the combustive gas and delivering an electric voltage to an electric power line (10), the system comprising:
- a fuel gas feed circuit (11) on the anode side;
- an oxygen feed circuit (12) on the cathode side, this oxygen feed circuit comprising means that enable the said oxygen feed circuit to be opened to the atmosphere;
the shut-down procedure comprising the following stages:
● an initial stage during which the oxygen supply is interrupted,
● a consumption phase during which a sustained current is drawn off from the fuel cell,
● a neutralisation stage during which the oxygen feed circuit is opened to the atmosphere,
● a final stage, during which the fuel gas supply is interrupted.

2. Shut-down procedure according to Claim 1, for a system also comprising:
- in the fuel gas feed circuit (11) on the anode side, a feed valve (110) and a pressure sensor (111) fitted downstream from the feed valve;
- in the oxygen gas feed circuit (12), a feed valve (120) and a pressure sensor (121) fitted downstream from the feed valve, and a purge valve (122) which enables the said oxygen feed circuit to be opened to the atmosphere;
- a voltage measurement device (13) in the said electric power line (10);
in which the shut-down procedure comprises the following operations:
- the initial stage enables the oxygen feed valve (110) to be closed;
- the consumption phase takes place at least so long as the voltage is higher than a predetermined threshold value;
- the neutralisation stage begins when the pressure in the oxygen circuit is lower than a comparison pressure and takes place as long as the voltage in the electric power line is higher than the said threshold value.

3. Shut-down procedure according to Claim 2, in which the comparison pressure is lower than atmospheric pressure by a chosen value (S).

4. Shut-down procedure according to Claims 2 or 3, in which the consumption phase and the neutralisation stage are at least partially concomitant.

5. Shut-down procedure according to Claim 2, in which the neutralisation stage takes place in a succession of periods during which the oxygen circuit is briefly opened to the atmosphere and then isolated from the atmosphere again.

6. Shut-down procedure according to any of the preceding claims, for a system in which the electric power line comprises a switch (10A), in which the said switch is opened in the final stage when the fuel gas supply has been interrupted.

7. Shut-down procedure according to Claim 1, for a system also comprising a unit (14) for the management of the electric power drawn from the cell and an electric load supplied via the said power management unit and electrical energy storage means, in which the consumption phase switches the energy management unit over to a mode in which the electrical energy storage means are recharged.

8. Shut-down procedure according to Claim 7, for a system in which the electrical energy storage means consist of an array of super-condensers (17).

9. Shut-down procedure according to Claims 7 or 8, in which, before beginning the initial stage, the charge level of the electrical energy storage means is checked and, if it is below an upper threshold value, the cell is kept in operation and the energy management unit is switched to a mode in which the electrical energy storage means are recharged, and when the charge level has become higher than or equal to the said upper threshold value, the initial stage is started.

10. Shut-down procedure according to Claim 1, for a system installed in an automobile vehicle, and in which the fuel cell uses a polymer membrane as its electrolyte.
